# EUROPEAN PATENT SPECIFICATION

(11) **EP 3 561 676 B1**
(45) Date of publication and mention of the grant of the patent: **13.10.2021**
(21) Application number: 18169733.5
(22) Date of filing: 27.04.2018
(51) Int. Cl.: G06F 11/22

(54) **DISPLAY DEVICE DETECTION SYSTEM**
SYSTEM ZUR ERKENNUNG EINER ANZEIGEVORRICHTUNG
SYSTÈME DE DÉTECTION DE DISPOSITIF D'AFFICHAGE

(43) Date of publication of application: 30.10.2019
(73) Proprietor: Top Victory Investments Ltd., Kowloon, Hong Kong (CN)
(72) Inventor: CHANG, Chiao-Chih, New Taipei City (TW); CHUANG, Chi-Han, New Taipei City (TW); QIU, Chen, New Taipei City (TW)
(74) Representative: Cabinet Chaillot

(56) References cited:
- EP-A1- 2 579 155
- EP-A2- 1 195 681
- WO-A2-2008/005120
- WO-A2-2014/210542
- US-A1- 2004 128 583

## Description

### Technical Field

The instant disclosure relates to a detection system and, more particularly, to a display device detection system.

### Related Art

Display devices at present usually have complex functions. For instance, many smart TVs nowadays can be connected to the internet and have an operation system or functions such as video on demand, which allow users to operate and access the internet. Since the display devices at present have more functions, repairing works become more difficult, accordingly.

In general, repairing personnel will arrive at a site where a malfunctioned display device is in advance and then overhaul the display device. Repairing personnel needs to use special detection device to detect varied software and hardware components in the display device such as a panel, electro mechanic parts, software, and chips to determine which one or ones of the components are malfunctioned and need repair. In a detection process, the detection device is connected to a corresponding interface of the display device and transmits debug command to the display device. The display device returns debug information to the detection device according to the debug command. Meanwhile, repairing personnel can check the debug information from the detection device while inspecting operation and reaction of the display device receiving the debug command. According to the debug information and the reaction of the display device, repairing personnel may discover problems.

Nevertheless, the display devices at present have complex functions; therefore, the debug information is extremely complex. Details that repairing personnel needs to inspect include not only images or sounds of the display device but also details such as working of the operation system and executing of each kinds of functions.
US 2004/128583 A1 discloses a display device detection and debug system according to the preamble of claim 1.
EP 2579155 A1 and EP 1195681 A2 disclose both a diagnosis electronic system according to prior art.

### SUMMARY

According to the aforementioned description of prior arts, display devices at present have more complex functions than old ones; therefore, difficulty in terms of detection of the display devices is increased. A conventional detection device is an off-line device and has limited debug functions for detection. In addition, repairing personnel has limited knowledge. While a display device with extremely complex software and hardware system is malfunctioned and needs to be repaired, the repairing work may not be going well if repairing personnel encounters a problem that he is not good at, or that is too hard to be discovered.

To address the above issue, the instant disclosure provides display device detection system in order to improve the capability of detection of the system and to lower the difficulty of detection on site.

According to an embodiment of the instant disclosure, a display device detection system is for detecting a display device. The display device detection system includes , as defined in claim 1, a front debug device, a portable device, and a cloud debug device. The front debug device is signally connected to the display device. The front debug device transmits a first debug command to the display device and receives first debug information from the display device. The portable device is signally connected to the front debug device and receives the first debug information. The cloud debug device is signally connected to the portable device. The cloud debug device includes an analysis module and a detection database. The cloud debug device receives the first debug information from the portable device. The analysis module analyzes the first debug information and searches the detection database to generate a debug analysis result. The cloud debug device transmits the debug analysis result to the portable device.

According to an embodiment of the instant disclosure, the display device detection system further includes a filming device. The front debug device further transmits a shooting command to the filming device. The filming device films the display device receiving the first debug command according to the shooting command to generate a real-time image. The portable device transmits the first debug information and the real-time image to the cloud debug device. The analysis module further analyzes the real-time image and searches the detection database to generate the debug analysis result.

According to an embodiment of the instant disclosure, the filming device is integrated with the portable device. The portable device receives the shooting command and controls the filming device to film the display device receiving the first debug command to generate the real-time image.

According to an embodiment of the instant disclosure, the cloud debug device further includes an active debug module. The analysis module analyzes the first debug information and searches the detection database to generate an active debug request. The active debug module transmits a second debug command to the portable device according to the active debug request. The portable device transmits the second debug command to the front debug device. The front debug device transmits the second debug command to the display device and receives second debug information from the display device. The portable device receives the second debug information and transmits the second debug information to the cloud debug device. The analysis module further analyzes the second debug information and searches the detection database to generate the debug analysis result.

According to an embodiment of the instant disclosure, the portable device includes a display screen. The portable device displays detection information on the display screen according to the debug analysis result.

According to an embodiment of the instant disclosure, the front debug device includes a wire connection interface. The front debug device is connected to the display device via the wire connection interface.

According to an embodiment of the instant disclosure, the wire connection interface is a serial port.

According to an embodiment of the instant disclosure, the front debug device is signally connected to the portable device in a Bluetooth technique.

According to an embodiment of the instant disclosure, the portable device is signally connected to the cloud debug device via internet.

According to an embodiment of the instant disclosure, the cloud debug device further includes a maintenance record database. The maintenance record database stores the debug analysis result corresponding to the display device.

Concisely, according to embodiments of the display device detection system of the instant disclosure, the display device detection system can improve the capability of detection and lower the difficulty of detection on site. As a result, repairing work can be more smoothly.

The features of the instant disclosure will no doubt become understandable to those of ordinary skill in the art after reading the following detailed description of the preferred embodiment that is illustrated in the various figures and drawings.

### BRIEF DESCRIPTION OF THE DRAWINGS

FIG. 1 illustrates a perspective view of a display device detection system according to an embodiment of the instant disclosure;
FIG. 2 illustrates a block diagram of the display device detection system according to an embodiment of the instant disclosure; and
FIG. 3 illustrates a block diagram of a display device detection system according to another embodiment of the instant disclosure.

### DETAILED DESCRIPTION

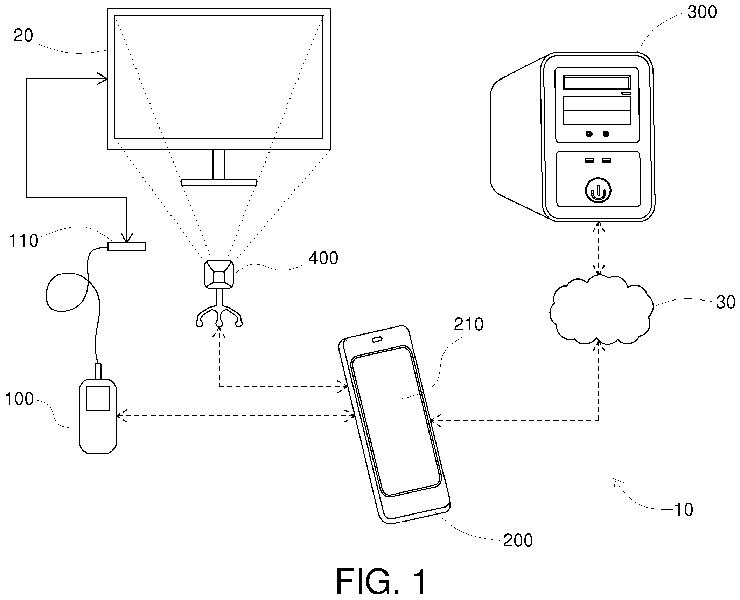

Please refer to FIG. 1. FIG. 1 is a perspective view of a display device detection system 10 according to an embodiment of the instant disclosure. In the embodiment, the display device detection system 10 is for detecting a display device 20. The display device 20 is, but is not limited to, smart TV. The display device detection system 10 includes a front debug device 100, a portable device 200, and a cloud debug device 300. The front debug device 100 is signally connected to the display device 20. The portable device 200 is signally connected to the front debug device 100. The cloud debug device 300 is signally connected to the portable device 200.

In the embodiment, repairing personnel can bring the front debug device 100 and the portable device 200 to a site where a malfunctioned display device 20 is. The front debug device 100 can be connected to the display device 20 in a wire manner. The front debug device 100 and the portable device 200 can be connected to each other in a wireless manner. In the embodiment, the portable device 200 is, but is not limited to, a smart phone, and the portable device 200 is, but is not limited to, connected to the cloud debug device 300 in a 3G/4G mobile communication technique. In the embodiment, the cloud debug device 300 is, for instance, a server located at headquarter of repairing center of display device manufacturer. The cloud debug device 300 gathers information of varied types of display devices made by the manufacturer and big data related to repair and detection of these display devices. In other embodiments, the cloud debug device 300 may also be a computer in a display device research center, e.g., a personal computer belonging to a research and development personnel.

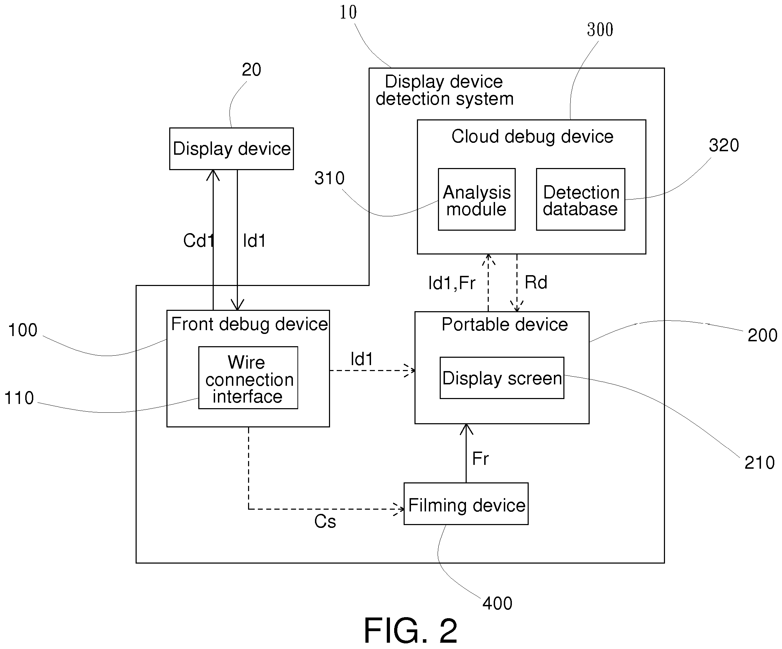

Please refer to FIG. 2. FIG. 2 illustrates a block diagram of the display device detection system 10 according to an embodiment of the instant disclosure. As shown in FIG. 1 and FIG. 2, when the front debug device 100 is connected to the display device 20, the front debug device 100 may transmit a first debug command Cd1 to the display device 20. The display device 20 may perform a series of internal debug operations according to the first debug command Cd1 and then generate first debug information Id1. The first debug information Id1 may include, for instance, a malfunction code corresponding to certain component or relative malfunction/error information. The display device 20 may transmit the first debug information Id1, and the front debug device 100 may receive the first debug information Id1 from the display device 20. Next, the front debug device 100 may transmit the first debug information Id1 to the portable device 200. The portable device 200 may receive the first debug information Id1.

As shown in FIG. 1 and FIG. 2, in the embodiment, the portable device 200 includes a display screen 210; therefore, the portable device 200 may display the first debug information Id1 on the display screen 210. Repairing personnel may determine the result of the detection by reviewing the first debug information Id1. Nevertheless, Due to the complex functions that the display device 20 has, scope of such debug information is extremely wide, and data contained in such debug information have so many details. It may be too hard for repairing personnel to interpret all of the contents in the debug information precisely and quickly on site. Thus, in the embodiment, the portable device 200 may further transmit the first debug information Id1 to the cloud debug device 300, and the cloud debug device 300 may assist to analyze and interpret the first debug information Id1.

As shown in FIG. 1 and FIG. 2, in the embodiment, the cloud debug device 300 includes an analysis module 310 and a detection database 320. The detection database 320 includes, for instance, detailed data and relative repair and detection information of the display device 20. The analysis module 310 may be, for instance, composed of software or hardware, which may not only perform analysis but also search information in the detection database 320 depending on needs. While the cloud debug device 300 receives the first debug information Id1 from the portable device 200, the analysis module 310 analyzes the first debug information Id1 in certain algorithm or process and searches relative data in the detection database 320 according to the first debug information Id1 so as to interpret relative contents in the first debug information Id1, identify what problem that causes the malfunction and error is, and finally generate a debug analysis result Rd. In some embodiments, according to the malfunction or error identified by the analyzing of the first debug information Id1, the analysis module 310 may further discover a solving scheme corresponding to the malfunction or error from the detection database 320. The debug analysis result Rd may also include the solving scheme. In the embodiment, the cloud debug device 300 may further transmit the debug analysis result Rd to the portable device 200. The portable device 200 may display the debug analysis result Rd on the display screen 210 according to the debug analysis result Rd, such that repairing personnel can be informed of the problem that causes the malfunction and error of the display device 20 and the corresponding solving scheme by reviewing the debug analysis result Rd.

As shown in FIG. 1 and FIG. 2, in the embodiment, the front debug device 100 includes a wire connection interface 110. The front debug device 100 is connected to the display device 20 via the wire connection interface 110. Moreover, the wire connection interface 110 is, but is not limited to, a serial port. In addition, the front debug device 100 and the portable device 200 have Bluetooth communication module, respectively. The front debug device 100 is signally connected to the portable device 200 in a Bluetooth technique. Further, the portable device 200 is signally connected to the cloud debug device 300 via internet 30. The portable device 200 may be connected to the internet 30 in the aforementioned 3G/4G mobile communication technique; alternatively, the portable device 200 may be connected to a network node in a wireless communication technique in advance and be connected to the internet 30 in a wire manner.

As shown in FIG. 1 and FIG. 2, in the embodiment, the display device detection system 10 further includes a filming device 400. While the front debug device 100 transmits the first debug command Cd1 to the display device 20, the front debug device 100 also transmits a shooting command Cs to the filming device 400. The filming device 400 starts to film the display device 20 according to the shooting command Cs. The filming device 400 may be aligned with the screen of the display device 20 so as to film an operating state of the display device 20 and images displayed on the display device 20 after the display device 20 receives the first debug command Cd1. In other words, the filming device 400 generates a real-time image Fr. The real-time image Fr includes the operating state of the display device 20 and the images displayed on the display device 20 after the display device 20 receives the first debug command Cd1. The real-time image Fr may be transmitted to the portable device 200. The portable device 200 may transmit the first debug information Id1 and the real-time image Fr to the cloud debug device 300. The analysis module 310 not only analyzes the first debug information Id1 but also analyzes the real-time image Fr. Because the real-time image Fr presents an actually operating state of the display device 20 and an actually reaction of the display device 20 in response to the first debug command Cd1, there are more data for analysis module 310 to analyze. In such case, the analysis module 310 can perform an interpretation, an analysis, and a search in a more accurate way to generate the debug analysis result Rd.

In different embodiments, the real-time image Fr may be transmitted to the cloud debug device 300 in real-time (filming and transmitting simultaneously); alternatively, the real-time image Fr may be recorded into a complete file and then be transmitted to the cloud debug device 300 along with the first debug information Id1.

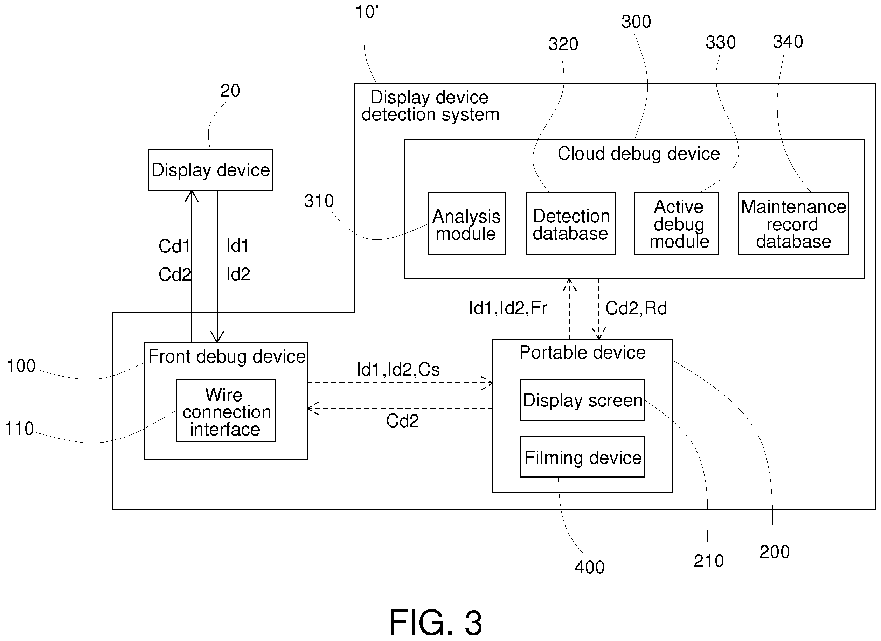

Please refer to FIG. 3. FIG. 3 is a block diagram of a display device detection system 10' according to another embodiment of the instant disclosure. In the embodiment, the filming device 400 is integrated with the portable device 200. For instance, the portable device 200 is a smart phone, and the filming device 400 is a camera module of the smart phone. The front debug device 100 may transmit the shooting command Cs to the portable device 200. The portable device 200 may receive the shooting command Cs and may control the filming device 400 to film the display device 20. In the meantime, the display device 20 may receive the first debug command Cd1 and may perform a corresponding operation. The portable device 200 may generate the real-time image Fr filmed by the filming device 400 and may transmit the first debug information Id1 and the real-time image Fr to the cloud debug device 300.

As shown in FIG. 3, in the embodiment, the cloud debug device 300 further includes an active debug module 330. The active debug module 330 may generate a subsequent debug command actively according to any shortage of an analysis result of former debug information. As descripted above, the analysis module 310 may receive and analyze the first debug information Id1 and search the detection database 320. In a case that the analysis module 310 determines that the present analysis is not enough to identify what a malfunction or an error of the display device 20 is, the analysis module 310 may generate an active debug request. The active debug module 330 may generate a second debug command Cd2 according to the active debug request. The second debug command Cd2 is generated according to the analysis of the analysis module 310 and is in response to the former first debug command Cd1, the first debug information Id1, and/or the real-time image Fr. The second debug command Cd2 may include a debug command different from the first debug command Cd1 so as to have the display device 20 perform the debug command different from the first debug command Cd1. As a result, there are more operating state, reaction and relative data regarding the display device 20 that may be obtained.

In the embodiment, the active debug module 330 may transmit the second debug command Cd2 to the portable device 200. The portable device 200 may transmit the second debug command Cd2 to the front debug device 100. The front debug device 100 may transmit the second debug command Cd2 to the display device 20. The display device 20 may perform a series of internal debug operations according to the second debug command Cd2 and generate second debug information Id2. The front debug device 100 may receive the second debug information Id2 from the display device 20 and transmit the second debug information Id2 to the portable device 200. The portable device 200 may receive the second debug information Id2 and transmit the second debug information Id2 to the cloud debug device 300. The analysis module 310 may further analyze the second debug information Id2, search the detection database 320 to generate the debug analysis result Rd, and transmit the debug analysis result Rd to the portable device 200.

In some embodiments, the front debug device 100 transmits the second debug command Cd2 to the display device 20 and also transmits the shooting command Cs to the filming device 400 and/or portable device 200, such that the filming device 400 films an actual state and reaction of the display device 20 performing the second debug command Cd2, so as to generate another corresponding real-time image Fr. The portable device 200 may transmit the second debug information Id2 and the corresponding real-time image Fr to the cloud debug device 300. The analysis module 310 may further analyze the second debug information Id2 and the corresponding real-time image Fr and search the detection database 320 to generate the debug analysis result Rd.

As shown in FIG. 3, in the embodiment, the cloud debug device 300 further includes a maintenance record database 340. The maintenance record database 340 stores the debug analysis result Rd corresponding to the display device 20. Whenever the display device detection system 10' performs the aforementioned steps of detection on any display device 20, relative data and debug analysis result Rd will be automatically stored in the maintenance record database 340 by the cloud debug device 300. The data in the maintenance record database 340 can be set as a part of the big data corresponding to detection and analysis. In addition, repairing details of each of the display device 20 of the data in the maintenance record database 340 can also be unified for further use. The repairing details may include disposals for every repaired display devices repaired by repairing personnel. The repairing details may also include relative income statements and information regarding exchanges of components. It is benefit to cost control and staff management in terms of repair. Meanwhile, these data in the maintenance record database 340 can be feedbacks to ends of research and development or marketing as references for product developing, planning, and designing.

Concisely, according to embodiments of the display device detection system of the instant disclosure, the display device detection system can improve the capability of detecting malfunctions and errors of display devices and lower the difficulty of detection on site by the use of the big data on the cloud and the ability to automatically and actively issue needed debug commands in response to conditions of detection. As a result, repairing work can be more smoothly.

While the instant disclosure has been described by way of example and in terms of the preferred embodiments, it is to be understood that the instant disclosure needs not be limited to the disclosed embodiments. For anyone skilled in the art, various modifications and improvements within the spirit of the instant disclosure are covered under the scope of the instant disclosure. The covered scope of the instant disclosure is based on the appended claims.

## Claims

1. A smart TV detection and debug system (10, 10') for detecting a smart TV (20), the smart TV detection and debug system (10, 10') comprising:
a front debug device (100) signally connected to the smart TV (20), the front debug device (100) being configured to transmit a first debug command (Cd1) to the smart TV (20) and being configured to receive first debug information (Id1) from the smart TV (20); and
a cloud debug device (300), the cloud debug device (300) comprising an analysis module (310) and a detection database (320), the cloud debug device (300) being configured to receive the first debug information (Id1), the analysis module (310) being configured to analyse the first debug information (Id1) and being configured to search the detection database (320) to generate a debug analysis result (Rd), and the cloud debug device (300) being configured to transmit the debug analysis result (Rd);
the smart TV detection and debug system (10, 10') being **characterized in that** it comprises a portable device (200) signally connected to the front debug device (100) in a wireless manner and being configured to receive the first debug information (Id1), the portable device (200) being connected to the cloud debug device (300) in a wireless manner and being configured to send j the first debug information (Id1) thereto, the front debug device (100) being detachably connected to the smart TV (20) in a wire manner; and
wherein the smart TV detection and debug system (10, 10') further comprises a filming device (400), wherein the front debug device (100) is further configured to transmit a shooting command (Cs) to the filming device (400), the filming device (400) being configured to film the smart TV (20) receiving the first debug command (Cd1) according to the shooting command (Cs) to generate a real-time image (Fr), the portable device (200) being configured to transmit the first debug information (Id1) and the real-time image (Fr) to the cloud debug device (300), and the analysis module (310) being further configured to analyse the real-time image (Fr) and to search the detection database (320) to generate the debug analysis result (Rd).

2. The smart TV detection and debug system (10, 10') of claim 1, wherein the filming device (400) is integrated with the portable device (200), and the portable device (200) being configured to receive the shooting command (Cs) and being configured to control the filming device (400) to film the smart TV (20) receiving the first debug command (Cd1) to generate the real-time image (Fr).

3. The smart TV detection and debug system (10, 10') of claim 1, wherein the cloud debug device (300) further comprises an active debug module (330), the analysis module (310) being configured to analyse the first debug information (Id1) and to search the detection database (320) to generate an active debug request, the active debug module (330) being configured to transmit a second debug command (Cd2) to the portable device (200) according to the active debug request, the portable device (200) being configured to transmit the second debug command (Cd2) to the front debug device (100), the front debug device (100) being configured to transmit the second debug command (Cd2) to the smart TV (20) and to receive second debug information (Id2) from the smart TV (20), the portable device (200) being configured to receive the second debug information (Id2) and to transmit the second debug information (Id2) to the cloud debug device (300), and the analysis module (310) being further configured to analyse the second debug information (Id2) and to search the detection database (320) to generate the debug analysis result (Rd).

4. The smart TV detection and debug system (10, 10') of claim 1, wherein the portable device (200) comprises a display screen (210), and the portable device (200) being configured to display detection information on the display screen (210) according to the debug analysis result (Rd).

5. The smart TV detection and debug system (10, 10') of claim 1, wherein the front debug device (100) comprises a wire connection interface (110), and the front debug device (100) is connected to the smart TV (20) via the wire connection interface (110).

6. The smart TV detection and debug system (10, 10') of claim 5, wherein the wire connection interface (110) is a serial port.

7. The smart TV detection and debug system (10, 10') of claim 1, wherein the front debug device (100) is signally connected to the portable device (200) in a Bluetooth technique.

8. The smart TV detection and debug system (10, 10') of claim 1, wherein the portable device (200) is signally connected to the cloud debug device (300) via internet.

9. The smart TV detection and debug system (10, 10') of claim 1, wherein the cloud debug device (300) further comprises a maintenance record database (340), and the maintenance record database (340) being configured to store the debug analysis result (Rd) corresponding to the smart TV (20).

## Patentansprüche

1. Smart-TV-Detektions- und -Debugsystem (10, 10') zum Detektieren eines Smart-TVs (20), wobei das Smart-TV-Detektions- und -Debugsystem (10, 10') umfasst:
eine Front-Debugvorrichtung (100), die mit dem Smart-TV (20) signalmäßig verbunden ist, wobei die Front-Debugvorrichtung (100) zum Senden eines ersten Debugbefehls (Cd1) an das Smart-TV (20) konfiguriert ist und zum Empfangen von ersten Debug-Informationen (Id1) vom Smart-TV (20) konfiguriert ist; und
eine Cloud-Debugvorrichtung (300), wobei die Cloud-Debugvorrichtung (300) ein Analysemodul (310) und eine Detektionsdatenbank (320) umfasst, die Cloud-Debugvorrichtung (300) zum Empfangen der ersten Debug-Informationen (Id1) konfiguriert ist, das Analysemodul (310) zum Analysieren der ersten Debug-Informationen (Id1) konfiguriert ist und zum Durchsuchen der Detektionsdatenbank (320) konfiguriert ist, um ein Debug-Analyseergebnis (Rd) zu erzeugen, und die Cloud-Debugvorrichtung (300) zum Senden des Debug-Analyseergebnisses (Rd) konfiguriert ist;
wobei das Smart-TV-Detektions- und -Debugsystem (10, 10') **dadurch gekennzeichnet ist, dass** es eine tragbare Vorrichtung (200) umfasst, die mit der Front-Debugvorrichtung (100) signalmäßig drahtlos verbunden und zum Empfangen der ersten Debug-Informationen (Id1) konfiguriert ist, die tragbare Vorrichtung (200) mit der Cloud-Debugvorrichtung (300) drahtlos verbunden und zum Senden der ersten Debug-Informationen (Id1) an dieselbe konfiguriert ist, und die Front-Debugvorrichtung (100) mit dem Smart-TV (20) trennbar drahtgebunden verbunden ist; und
wobei das Smart-TV-Detektions- und -Debugsystem (10, 10') ferner eine Filmaufnahmevorrichtung (400) umfasst, wobei die Front-Debugvorrichtung (100) ferner zum Senden eines Aufnahmebefehls (Cs) an die Filmaufnahmevorrichtung (400) konfiguriert ist, die Filmaufnahmevorrichtung (400) so konfiguriert ist, dass sie das Smart-TV (20), das den ersten Debugbefehl (Cd1) empfängt, gemäß dem Aufnahmebefehl (Cs) filmt, um ein Echtzeitbild (Fr) zu erzeugen, die tragbare Vorrichtung (200) zum Senden der ersten Debug-Informationen (Id1) und des Echtzeitbildes (Fr) an die Cloud-Debugvorrichtung (300) konfiguriert ist, und das Analysemodul (310) ferner zum Analysieren des Echtzeitbildes (Fr) und zum Durchsuchen der Detektionsdatenbank (320) konfiguriert ist, um das Debug-Analyseergebnis (Rd) zu erzeugen.

2. Smart-TV-Detektions- und -Debugsystem (10, 10') nach Anspruch 1, wobei die Filmaufnahmevorrichtung (400) in die tragbare Vorrichtung (200) integriert ist, und die tragbare Vorrichtung (200) zum Empfangen des Aufnahmebefehls (Cs) konfiguriert ist und so konfiguriert ist, dass sie die Filmaufnahmevorrichtung (400) zum Filmen des Smart-TVs (20), das den ersten Debugbefehl (Cd1) empfängt, steuert, um das Echtzeitbild (Fr) zu erzeugen.

3. Smart-TV-Detektions- und -Debugsystem (10, 10') nach Anspruch 1, wobei die Cloud-Debugvorrichtung (300) ferner ein aktives Debugmodul (330) umfasst, das Analysemodul (310) zum Analysieren der ersten Debug-Informationen (Id1) und zum Durchsuchen der Detektionsdatenbank (320) konfiguriert ist, um eine Anforderung für aktives Debuggen zu erzeugen, das aktive Debugmodul (330) zum Senden eines zweiten Debugbefehls (Cd2) gemäß der Anforderung für aktives Debuggen an die tragbare Vorrichtung (200) konfiguriert ist, die tragbare Vorrichtung (200) zum Senden des zweiten Debugbefehls (Cd2) an die Front-Debugvorrichtung (100) konfiguriert ist, die Front-Debugvorrichtung (100) zum Senden des zweiten Debugbefehls (Cd2) an das Smart-TV (20) und zum Empfangen von zweiten Debug-Informationen (Id2) vom Smart-TV (20) konfiguriert ist, die tragbare Vorrichtung (200) zum Empfangen der zweiten Debug-Informationen (Id2) und zum Senden der zweiten Debug-Informationen (Id2) an die Cloud-Debugvorrichtung (300) konfiguriert ist, und das Analysemodul (310) ferner zum Analysieren der zweiten Debug-Informationen (Id2) und zum Durchsuchen der Detektionsdatenbank (320) konfiguriert ist, um das Debug-Analyseergebnis (Rd) zu erzeugen.

4. Smart-TV-Detektions- und -Debugsystem (10, 10') nach Anspruch 1, wobei die tragbare Vorrichtung (200) einen Anzeigebildschirm (210) umfasst, und die tragbare Vorrichtung (200) zum Anzeigen von Detektionsinformationen auf dem Anzeigebildschirm (210) gemäß dem Debug-Analyseergebnis (Rd) konfiguriert ist.

5. Smart-TV-Detektions- und -Debugsystem (10, 10') nach Anspruch 1, wobei die Front-Debugvorrichtung (100) eine Drahtverbindungsschnittstelle (110) umfasst, und die Front-Debugvorrichtung (100) mit dem Smart-TV (20) über die Drahtverbindungsschnittstelle (110) verbunden ist.

6. Smart-TV-Detektions- und -Debugsystem (10, 10') nach Anspruch 5, wobei die Drahtverbindungsschnittstelle (110) ein serieller Anschluss ist.

7. Smart-TV-Detektions- und -Debugsystem (10, 10') nach Anspruch 1, wobei die Front-Debugvorrichtung (100) mit der tragbaren Vorrichtung (200) mittels einer Bluetooth-Technik signalmäßig verbunden ist.

8. Smart-TV-Detektions- und -Debugsystem (10, 10') nach Anspruch 1, wobei die tragbare Vorrichtung (200) mit der Cloud-Debugvorrichtung (300) über das Internet signalmäßig verbunden ist.

9. Smart-TV-Detektions- und -Debugsystem (10, 10') nach Anspruch 1, wobei die Cloud-Debugvorrichtung (300) ferner eine Wartungsprotokolldatenbank (340) umfasst, und die Wartungsprotokolldatenbank (340) so konfiguriert ist, dass sie das Debug-Analyseergebnis (Rd) speichert, das dem Smart-TV (20) entspricht.

## Revendications

1. Système de détection et de débogage de télévision, TV, intelligente (10, 10') pour détecter une TV intelligente (20), le système de détection et de débogage de TV intelligente (10, 10') comprenant :
un dispositif de débogage frontal (100) connecté par signaux à la TV intelligente (20), le dispositif de débogage frontal (100) étant configuré pour transmettre une première instruction de débogage (Cd1) à la TV intelligente (20) et étant configuré pour recevoir des premières informations de débogage (Id1) à partir de la TV intelligente (20) ; et
un dispositif de débogage en nuage (300), le dispositif de débogage en nuage (300) comprenant un module d'analyse (310) et une base de données de détection (320), le dispositif de débogage en nuage (300) étant configuré pour recevoir les premières informations de débogage (Id1), le module d'analyse (310) étant configuré pour analyser les premières informations de débogage (Id1) et étant configuré pour effectuer une recherche dans la base de données de détection (320) afin de générer un résultat d'analyse de débogage (Rd), et le dispositif de débogage en nuage (300) étant configuré pour transmettre le résultat d'analyse de débogage (Rd) ;
le système de détection et de débogage de TV intelligente (10, 10') étant **caractérisé en ce qu'**il comprend un dispositif portable (200) connecté par signaux au dispositif de débogage frontal (100) d'une manière sans fil et qui est configuré pour recevoir les premières informations de débogage (Id1), le dispositif portable (200) étant connecté au dispositif de débogage en nuage (300) d'une manière sans fil et étant configuré pour envoyer les premières informations de débogage (Id1) à celui-ci, le dispositif de débogage frontal (100) étant connecté de manière détachable à la TV intelligente (20) d'une manière filaire ; et
dans lequel le système de détection et de débogage de TV intelligente (10, 10') comprend en outre un dispositif de filmage (400), dans lequel le dispositif de débogage frontal (100) est en outre configuré pour transmettre une instruction de prise de vues (Cs) au dispositif de filmage (400), le dispositif de filmage (400) étant configuré pour filmer la TV intelligente (20) recevant la première instruction de débogage (Cd1) selon l'instruction de prise de vues (Cs) pour générer une image en temps réel (Fr), le dispositif portable (200) étant configuré pour transmettre les premières informations de débogage (Id1) et l'image en temps réel (Fr) au dispositif de débogage en nuage (300), et le module d'analyse (310) étant en outre configuré pour analyser l'image en temps réel (Fr) et pour effectuer une recherche dans la base de données de détection (320) afin de générer le résultat d'analyse de débogage (Rd).

2. Système de détection et de débogage de TV intelligente (10, 10') selon la revendication 1, dans lequel le dispositif de filmage (400) est intégré au dispositif portable (200), et le dispositif portable (200) étant configuré pour recevoir l'instruction de prise de vues (Cs) et étant configuré pour commander le dispositif de filmage (400) pour filmer la TV intelligente (20) recevant la première instruction de débogage (Cd1) pour générer l'image en temps réel (Fr).

3. Système de détection et de débogage de TV intelligente (10, 10') selon la revendication 1, dans lequel le dispositif de débogage en nuage (300) comprend en outre un module de débogage actif (330), le module d'analyse (310) étant configuré pour analyser les premières informations de débogage (Id1) et pour effectuer une recherche dans la base de données de détection (320) afin de générer une demande de débogage active, le module de débogage actif (330) étant configuré pour transmettre une seconde instruction de débogage (Cd2) au dispositif portable (200) selon la demande de débogage active, le dispositif portable (200) étant configuré pour transmettre la seconde instruction de débogage (Cd2) au dispositif de débogage frontal (100), le dispositif de débogage frontal (100) étant configuré pour transmettre la seconde instruction de débogage (Cd2) à la TV intelligente (20) et pour recevoir des secondes informations de débogage (Id2) à partir de la TV intelligente (20), le dispositif portable (200) étant configuré pour recevoir les secondes informations de débogage (Id2) et pour transmettre les secondes informations de débogage (Id2) au dispositif de débogage en nuage (300), et le module d'analyse (310) étant en outre configuré pour analyser les secondes informations de débogage (Id2) et pour effectuer une recherche dans la base de données de détection (320) afin de générer le résultat d'analyse de débogage (Rd).

4. Système de détection et de débogage de TV intelligente (10, 10') selon la revendication 1, dans lequel le dispositif portable (200) comprend un écran d'affichage (210), et le dispositif portable (200) étant configuré pour afficher des informations de détection sur l'écran d'affichage (210) selon le résultat d'analyse de débogage (Rd).

5. Système de détection et de débogage de TV intelligente (10, 10') selon la revendication 1, dans lequel le dispositif de débogage frontal (100) comprend une interface de connexion filaire (110), et le dispositif de débogage frontal (100) est connecté à la TV intelligente (20) par l'intermédiaire de l'interface de connexion filaire (110).

6. Système de détection et de débogage de TV intelligente (10, 10') selon la revendication 5, dans lequel l'interface de connexion filaire (110) est un port série.

7. Système de détection et de débogage de TV intelligente (10, 10') selon la revendication 1, dans lequel le dispositif de débogage frontal (100) est connecté par signaux au dispositif portable (200) dans une technique Bluetooth.

8. Système de détection et de débogage de TV intelligente (10, 10') selon la revendication 1, dans lequel le dispositif portable (200) est connecté par signaux au dispositif de débogage en nuage (300) par l'intermédiaire d'Internet.

9. Système de détection et de débogage de TV intelligente (10, 10') selon la revendication 1, dans lequel le dispositif de débogage en nuage (300) comprend en outre une base de données d'enregistrements de maintenance (340), et la base de données d'enregistrements de maintenance (340) étant configurée pour stocker le résultat d'analyse de débogage (Rd) correspondant à la TV intelligente (20).
